# EUROPÄISCHE PATENTSCHRIFT

(11) **EP 3 199 014 B1**
(45) Veröffentlichungstag und Bekanntmachung des Hinweises auf die Patenterteilung: **10.03.2021**
(21) Anmeldenummer: 17150742.9
(22) Anmeldetag: 10.01.2017
(51) Int. Cl.: B29C 48/00

(54) **VERFAHREN UND VORRICHTUNG ZUM HERSTELLEN VON STRANGPRESSPRODUKTEN**
METHOD AND DEVICE FOR PRODUCING EXTRUDED PRODUCTS
PROCÉDÉ ET DISPOSITIF DE FABRICATION DE PRODUITS EXTRUDÉS

(30) Priorität: 12.01.2016 DE 102016100390
(43) Veröffentlichungstag der Anmeldung: 02.08.2017
(73) Patentinhaber: Pfeifer Holz GmbH, 86556 Kühbach (DE)
(72) Erfinder: PFEIFER, Clemens, 6460 Imst (AT)
(74) Vertreter: Ernicke, Klaus Stefan

(56) Entgegenhaltungen:
- WO-A2-02/21900
- WO-A2-2004/083541
- CA-A1- 2 670 216
- FR-A6- 2 213 668
- JP-A- 2004 017 502
- US-A- 2 717 420
- US-B1- 6 186 060
- "WOOD ENTERS THE FRAME", EUROPEAN PLASTICS NEWS, EMAP BUSINESS PUBLICATION, LONDON, GB, vol. 27, no. 8, 1 September 2000 (2000-09-01), page 38/39, XP000987457, ISSN: 0306-3534

## Beschreibung

Die Erfindung betrifft ein Verfahren und eine Vorrichtung zum Herstellen von Strangpressprodukten mit den Merkmalen im Oberbegriff des Verfahrens- und Vorrichtungshauptanspruchs Das Dokument US6186060B1 offenbart ein Verfahren zum Herstellen von Strangpressprodukten gemäß dem Oberbegriff des Anspruchs 1, eine Vorrichtung zur Durchführung dieses Verfahrens, und ein Strangpressprodukt.

Aus der Praxis ist es bekannt, Palettenklötze aus einem stangenförmigen Strang herzustellen, der aus mit Bindemittel versehenen pflanzlichen Kleinteilen, insbesondere Holzteilen, stranggepresst wird. Vom ausgehärteten Strang werden mit einer Kappsäge die Palettenklötze abgetrennt. Die Stirnflächen des Strangs und der Palettenklötze stimmen in Form und Größe überein.

Die WO 2004/083541 A2 befasst sich mit einer Strangpresse zur Herstellung von verstärkten balkenartigen Profilen mit optimierter äußerer Erscheinung, wobei Drähte oder andere Versteifungsmittel in eine extrudierte Masse aus Zellulosefasern und einem thermoplastischen Kunststoff eingebettet werden. Mittels einer Säge werden aus dem quasi endlosen Strang mehrere stranggepresste Profile mit einstellbarer Länge abteilt. Bei diesen Trennschnitten wird die Stirnfläche des Strangs nicht verändert.

Die JP 2004-017502 A zeigt eine Pelletpresse mit einem vorgeschalteten Extruder, aus dessen Matrize durch mehrere Matrizenöffnungen längliche Materialstückchen aus einem zähflüssigen Ausgangsmaterial ausgepresst und in die Pelletpresse abgeworfen werden, wo sie durch Koller weiter plastifiziert und zur Bildung von Pellets durch eine weitere Matrize gedrückt und mit einem Messer abgetrennt werden.

Die CA 2,670,216 A1 betrifft biologisch abbaubare Verpackungsmittel in Form von Platten oder kleineren profilierten Verpackungschips, die per Extrusion aus Zellulosefasern und Stärke hergestellt und aus einem Strang abgelängt werden.

Es ist Aufgabe der vorliegenden Erfindung, eine verbesserte Herstelltechnik für Strangpressprodukte aufzuzeigen.

Die Erfindung löst diese Aufgabe mit den Merkmalen im Verfahrens- und Vorrichtungshauptanspruch.
Die beanspruchte Herstelltechnik, d.h. das Herstellverfahren und die Herstellvorrichtung, haben verschiedene Vorteile.

Die Produktionsleistung und die Effizienz können gesteigert werden. Der stangenförmige, stranggepresste Strang aus mit Bindemittel versehenen pflanzlichen Kleinteilen, insbesondere Holzkleinteilen, kann eine gegebene Stirnfläche aufweisen und wird mit der beanspruchten Herstelltechnik in mehrere einzelne Strangpressprodukte mit kleinerer Stirnfläche getrennt und aufgeteilt. Der gepresste massive oder hohle Strang kann mit einer quasi endlosen Länge produziert werden.

Das Trennen und Aufteilen des Strangs kann mittels einer Abteil-Trennvorrichtung erfolgen. Zum Trennen und Aufteilen des Strangs können mehrere Trennschnitte nacheinander ausgeführt werden, die entlang und quer zur Längsachse des Strangs gerichtet sind. Das Trennen und Aufteilen des Strangs mit mehreren Trennschnitten und die Bildung der Strangpressprodukte können in nur einer Abteil-Trennvorrichtung durchgeführt werden, die hierfür entsprechend ausgebildet ist. Die Abteil-Trennvorrichtung kann mehrere baulich integrierte Trenneinheiten aufweisen.

Die Strangpressprodukte können unterschiedlich ausgebildet sein. Vorzugsweise handelt es sich um Klötze, insbesondere Palettenklötze, und/oder um längliche Leisten, insbesondere Profile. Die Stangenform des Strangs ist hierfür besonders günstig.

Die beanspruchten Herstelltechnik ermöglicht den Ersatz von teueren und bisher aus Massivholz aufwändig hergestellten Profilen, z.B. dreieckigen Leisten, durch kostengünstige, hochqualitative Strangpressprodukte. Diese haben eine homogene Zusammensetzung, die gegenüber Massivholz mit Astlöchern auch eine bessere Festigkeit bietet. Zudem können im Strangpressprozess gezielt lokale Verdichtungen und entsprechend andere Eigenschaften im Strang erreicht werden. Hierdurch können z.B. die Festigkeit oder die Oberflächendichte und die Verschleißfestigkeit beeinflusst und eingestellt werden.

Der Strang ist stangenförmig ausgebildet. Er hat eine über die Stranglänge bevorzugt gleich bleibende Querschnittsform und Außenkontur. Der Strang weist bevorzugt eine Außenkontur auf, die von einer ebenen flachen Plattenform abweicht. Die Querschnittsform des Strangs weicht bevorzugt von einer geschlossenen Rechteckform mit geraden Außenkanten und vier rechtwinkligen Ecken ab.

Die Außenkontur des Strangs kann z.B. zumindest bereichsweise gewölbt sein. Sie kann auch bereichsweise eben sein und mindestens eine anschließende, insbesondere randseitige, Fase oder Kerbe aufweisen. Der Strang kann massiv ausgebildet sein. Er kann auch einen oder mehrere innere Hohlräume bzw. axiale Hohlkanäle oder sog. Dornlöcher aufweisen. Durch letztere kann einerseits Material gespart und andererseits die Aushärtung durch innere Bedampfung optimiert werden.

Bei der beanspruchten Herstelltechnik können Strangpressprodukte mit einer weitgehend beliebigen, wählbaren Außenkontur hergestellt werden.

Dies können insbesondere gewölbte und/oder schräg abgewinkelte Außenkonturen der Strangpressprodukte sein. Ein Teil dieser Außenkontur der Strangpressprodukte kann durch die Außenkontur des Strangs gebildet werden. Ein anderer Teil kann durch das Auftrennen und Abteilen der Strangpressprodukte aus dem Strang gebildet werden. Durch die beim Prozess geschaffene Trennfläche kann eine Seitenwand der Strangpressprodukte gebildet werden. Hierfür kann der Strang mehrere nebeneinander angeordnete und nicht-diskrete Strangbereiche aufweisen, die durch einen Trennschnitt in mehrere Strangpressprodukte entsprechend abgeteilt werden. Schräge Fasen oder andere Eckbereichsformen der Strangpressprodukte können dabei durch einen inneren axialen Hohlraum des Strangs gebildet werden, durch den ein axialer Trennschnitt geführt wird.

In einer anderen Variante können mehrere diskrete Strangbereiche des Strangs durch eine schmale und z.B. stegartige Verbindungsstelle verbunden sein, die mit einem Trennschnitt durchgetrennt und ggf. entfernt wird. Die diskreten Strangbereiche und die Strangpressprodukte können dabei eine bereits weitestgehend übereinstimmende Stirnfläche aufweisen. Diese Herstelltechnik ist vor allem für komplizierte, insbesondere gewölbte, Außenkonturen von Strangpressprodukten von Vorteil. Diese Außenkonturen können bereits beim Strang bzw. beim Strangbereich vorhanden sein. Sie können bei der Strangherstellung in einer Strangpresse geformt werden.

Die Aufteilung eines im Querschnitt überdimensionierten Strangs in mehrere kleinere Strangpressprodukte hat produktionstechnische Vorteile. Die Herstellvorrichtung hat eine gegenüber dem Stand der Technik wesentlich höhere Produktionsleistung und Effizienz. Mit einer gegebenen Zahl von Herstellvorrichtungen kann in gleicher Zeit eine wesentlich höhere Zahl von Strangpressprodukten als nach dem Stand der Technik hergestellt werden. Zudem kann die Pressenkapazität besser ausgelastet werden. Der Bau-, Platz- und Energieaufwand wird gemindert. Für den gleichen Ausstoß werden nach der Erfindung weniger Herstellvorrichtungen und weniger Platz als beim Stand der Technik benötigt. Die Leistungssteigerung ist insbesondere vor dem Hintergrund einer zeitaufwändigen Herstellung und Aushärtung des Strangs von Vorteil.

Die beanspruchte Herstelltechnik ermöglicht es, mit zwei oder mehr Trennschnitten aus unterschiedlichen Richtungen zu arbeiten. Die Trennschnitte können entlang und quer zur Längsachse des Strangs gerichtet sein. Dies schließt sowohl eine exakt axiale oder rechtwinklige Ausrichtung, als auch eine Schräglage in einer oder beiden Richtungen ein. Ferner können mehrere entlang der Längsachse gerichtete Trennschnitte eine unterschiedliche Neigung haben. Derartige Trennschnitte können z.B. vertikal und horizontal oder mit beliebigen anderen Winkelbeziehungen zueinander ausgerichtet sein.

Das Trennen und Abteilen erfolgt vorzugsweise spanabhebend, insbesondere durch Sägen. Alternativ sind andere Trenntechniken, z.B. Abbrennen oder dgl. möglich.

Vorzugsweise werden von dem Strang mit einem quer gerichteten Trennschnitt ein oder mehrere scheiben- oder leistenförmige Strangteile abgetrennt, aus denen anschließend durch einen oder mehrere Trennschnitte entlang der besagten Längsachse des Strangs jeweils zwei oder mehrere Strangpressprodukte abgeteilt werden. Die beanspruchte Abteil-Trenneinrichtung weist insbesondere hierfür mehrere nacheinander geschaltete Trenneinheiten auf. Diese können in Richtung der besagten Längsachse hintereinander angeordnet sein. Die Trenneinheiten können einen seitlichen Versatz gegenüber der besagten Längsachse haben.

In einer Ausgestaltung weist die Abteil-Trenneinrichtung mehrere hintereinander und bevorzugt mit seitlichem Versatz angeordnete Trenneinheiten, insbesondere Sägeeinheiten, auf. Die in Strangpressrichtung erste Trenneinheit erzeugt einen quer zur Längsachse des Strangs ausgerichteten Trennschnitt und eine nachgeschaltete Trenneinheit erzeugt einen oder mehrere entlang der Längsachse des Strangs ausgerichtete Trennschnitte. Die Abteil-Trenneinrichtung kann auch mehrere der besagten nachgeschaltete Trenneinheiten aufweisen.

Der Strang wird bevorzugt intermittierend in Axialrichtung vorgeschoben, wobei der Trennschnitt quer zur Längsachse bei Stillstand des Strangs erfolgt. Die abgetrennten Strangteile werden danach in einer Relativbewegung gegenüber einem Trennmittel abgeteilt. Vorzugsweise werden dabei ein oder mehrere Strangteile stirnseitig eingespannt und gegenüber einem stationären Trennmittel bewegt. Die Kinematik kann auch anders, insbesondere ungedreht sein. Außerdem kann der Strang in einer anderen Variante kontinuierlich bewegt, insbesondere vorgeschoben werden.

Die Reihenfolge der Trennschnitte kann in einer anderen Variante umgedreht sein, wobei am Strang zunächst ein oder mehrere entlang seiner Längsachse gerichtete Trennschnitte zum Abteilen von mehreren axialen und mit dem Strang noch verbundenen Strangbereichen eingebracht werden und anschließend durch einen quer zur Längsachse gerichteten Trennschnitt die Strangpressprodukte bzw. Endprodukte aus dem Strangbereich abgetrennt und gebildet werden. Die Anordnung, Ausbildung und Funktion der Trenneinheiten ist entsprechend geändert.

Die Abteil-Trenneinrichtung, insbesondere die Trenneinheit, kann eine ggf. verstellbare Führungs- und Positioniereinrichtung für den Strang und dessen Teile beim Trenn- und Abteilprozess aufweisen. Die Abteil-Trenneinrichtung, insbesondere die Trenneinheit, kann ferner eine Vereinzelungseinrichtung für die getrennten und abgeteilten Strangpressprodukte aufweisen.

Die getrennten und abgeteilten Strangpressprodukte können in beiden Varianten für den Weitertransport einzeln oder gruppenweise bereit gestellt werden. Sie können anschließend kontrolliert, z.B. gewogen und/oder vermessen, werden. Ferner kann sich eine Nachbehandlung anschließen, z.B. eine Trocknung und/oder Abkühlung und eine Kommissionierung bzw. Palettierung und Verpackung der Strangpressprodukte.

Für die Qualität der Strangpressprodukte ist eine einstellbare Homogenität und gleichmäßige Aushärtung von Vorteil. Für eine gleichmäßige und schnelle Aushärtung ist eine Wärmeinbringung von innen und/oder von außen durch Dampfkondensation von Vorteil. Dies ermöglicht auch eine Verkürzung der anschließenden Auskühlstrecke und eine Verringerung des Platz- und Bauaufwands. Für die Homogenisierung ist eine der Strangpresse vorgeschaltete Aufbereitung der pflanzlichen Kleinteile von Vorteil, wobei die zunächst grob zerkleinerten Pflanzenteile mit einem Bandtrockner getrocknet, anschließend feiner zerteilt und nach Partikelgrößen klassifiziert getrennt sowie zwischengespeichert werden. Aus den unterschiedlichen Partikelgrößen kann anschließend die für die jeweiligen Strangpressprodukte günstige Partikelmischung hergestellt, mit Bindemittel, z.B. aufgesprühten Leim, versehen und danach stranggepresst werden.

Die Vorrichtung zur Durchführung des Verfahrens zum Herstellen von Strangpressprodukten aus einem stangenförmigen, stranggepressten Strang aus mit Bindemittel versehenen pflanzlichen Kleinteilen, insbesondere Holzkleinteilen, weist eine Trenneinrichtung auf, die als Abteil-Trenneinrichtung ausgebildet ist, welche den stangenförmigen Strang mit einer gegebenen Stirnfläche in mehrere einzelne Strangpressprodukte, insbesondere Klötze und/oder Leisten, mit kleinerer Stirnfläche trennt und aufteilt.

Die Herstellvorrichtung kann ferner eine Strangpresse und eine nachgeschaltete Abteil-Trenneinrichtung aufweisen, wobei die vorzugsweise mit einer Bedampfungseinrichtung und ggf. einem Pressdorn ausgerüstete Strangpresse einen stangenförmigen, stranggepressten, massiven oder hohlen Strang aus mit Bindemittel versehenen pflanzlichen Kleinteilen, insbesondere Holzkleinteilen, herstellt und kontinuierlich oder intermittierend in Strangpressrichtung vorschiebt. Die Strangpresse stellt bevorzugt einen Strang mit einer von einer ebenen flachen Plattenform abweichenden Außenkontur her.

Die Herstellvorrichtung kann ggf. auch eine Aufbereitung für pflanzliche Kleinteile und/oder eine Kontrolleinrichtung für Strangpressprodukte und/oder eine Nachbereitung für die Strangpressprodukte beinhalten.

Aus dem massiven oder hohlen Strang können durch Trennen und Aufteilen oder Abteilen massive oder hohle bzw. gelochte Strangpressprodukte hergestellt werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
Figur 1: eine Herstellvorrichtung in Form einer Strangpressanlage in einer Schemadarstellung,
Figur 2: eine Seitenansicht eines Teils der Herstellvorrichtung mit einer Strangpresse und einer Abteil-Trennvorrichtung,
Figur 3 und 4: eine Seitenansicht und eine geklappte Stirnansicht einer Abteil-Trennvorrichtung,
Figur 5: eine schematische Draufsicht auf eine Abteil-Trennvorrichtung mit Trenneinheiten zum Ablängen und Abteilen,
Figur 6 bis 12: einen Funktionsablauf der Trenneinheit zum Abteilen gemäß Figur 5 in mehreren Schritten,
Figur 13 bis 15: einen Strang und dessen Abtrennen und Aufteilen in Strangpressprodukte in mehreren Schritten,
Figur 16: einen abgebrochenen Längsschnitt durch einen Formkanal einer Strangpresse,
Figur 17 bis 19: Querschnittsdarstellungen des Formkanals und Strangs an verschiedenen Stellen der Anordnung von Figur 16 und
Figur 20 bis 24: verschiedene Varianten in der Formgebung eines Strangs und der hieraus abgetrennten und abgeteilten Strangpressprodukte sowie der Trennschnitte.

Die Erfindung betrifft ein Verfahren und eine Herstellvorrichtung (1) zum Herstellen von Strangpressprodukten (20). Die Erfindung betrifft auch die Strangpressprodukte (20).

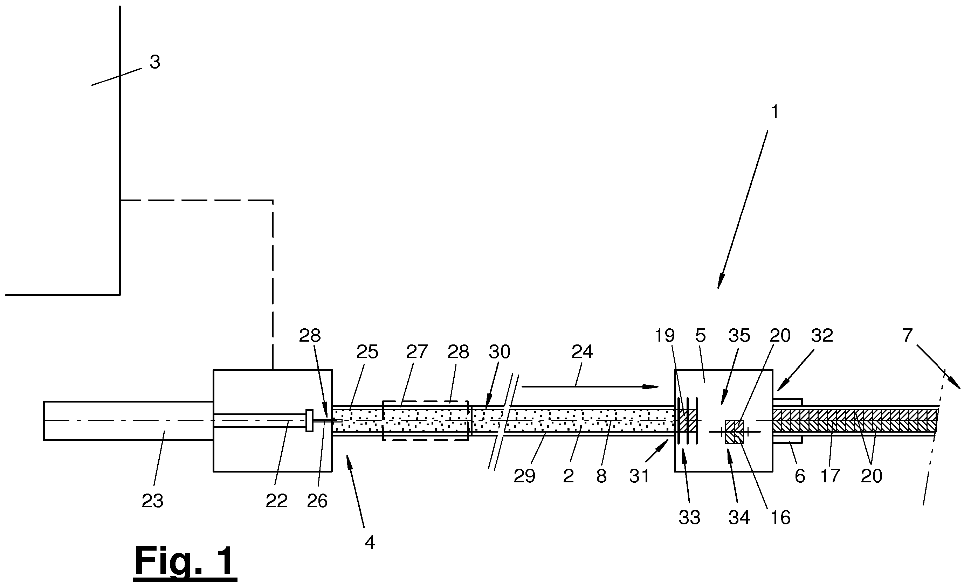

Die Herstellvorrichtung (1) umfasst zumindest eine Abteil-Trennvorrichtung (5) und ein hier durchgeführtes Verfahren zum Abtrennen und Aufteilen eines Strangs (2) in mehrere Strangpressprodukte (20). Die Herstellvorrichtung (1) und das zugehörige Verfahren können ferner eine Strangpresse (4) sowie ggf. auch eine Aufbereitung (3) für pflanzliche Kleinteile und/oder eine Kontrolleinrichtung (6) für Strangpressprodukte (20) und/oder eine Nachbereitung (7) für die Strangpressprodukte (20) beinhalten. Figur 1 verdeutlicht diese Ausbildung und Funktion in einer beispielhaften Schemadarstellung.

Der Strang (2) besteht aus pflanzlichen Kleinteilen, insbesondere Holzkleinteilen, die mit einem Bindemittel versehen sind. Das Bindemittel kann aushärten, z.B. unter Wärmezufuhr. Es kann z.B. als Leim ausgebildet und auf die pflanzlichen Kleinteile durch Sprühauftrag oder auf andere Weise aufgebracht werden.

Die mit Bindemittel versehenen pflanzlichen Kleinteile werden in einer Aufbereitung (3) hergestellt und einer Strangpresse (4) zugeführt, welche aus den pflanzlichen Kleinteilen einen stranggepressten Strang (2) herstellt und diesen der Abteil-Trennvorrichtung (5) vorzugsweise direkt in Strangpressrichtung (24) zuführt.

Die Aufbereitung (3) weist eine Bereitstellung für die Holzkleinteile auf. Diese können extern oder vor Ort produziert werden. Die pflanzlichen Kleinteile werden z.B. durch Zerkleinern eines Holzmaterials nebst Trocknung, Sichtung und Klassifizierung der Kleinteile hergestellt. Vorzugsweise wird das Holzausgangsmaterial zuerst grob zerkleinert, anschließend in einem Bandtrockner getrocknet, danach feiner zerkleinert und gesichtet sowie nach Größe klassifiziert. Die Kleinteile können dann größenspezifisch separat zwischengespeichert werden. Die verschiedenen Partikelgrößen können dann in einer für den Strang (2) geeigneten Zusammensetzung vermischt, mit dem besagten Bindemittel versehen und dann der Strangpresse (4) zugeführt werden.

Die Strangpresse (4) presst und fördert den Strang (2) kontinuierlich oder intermittierend. Sie weist eine Presseinheit mit einem Pressorgan (22), z.B. einer Schnecke oder einem reversierendem Pressstempel, sowie einen Antrieb (23), z.B. einen hydraulischen Zylinder, auf. Die Kleinteile werden in eine Füll- und Presskammer eingefüllt und vom Pressorgan (22) in Strangpressrichtung (24) in einen bevorzugt gekühlten Formkanal (25) mit einer formgebenden, bevorzugt starren Wandung gedrückt.

Im Formkanal (25), der auch als Rezipient bezeichnet wird, erhält der Strang (2) seine Außenkontur (11). Der Strang (2) kann über seinen Querschnitt bzw. seine Stirnfläche (9) massiv ausgebildet sein. Der Strang (2) kann alternativ innen hohl sein und eine oder mehrere axiale innere Hohlkanäle (15) aufweisen, die z.B. durch einen Pressdorn (26) hergestellt werden.

Der geformte Strang (2) gelangt anschließend in Pressrichtung (24) in eine Reaktionsstrecke (27), in der die Aushärtung des Bindemittels aktiviert wird. Dies kann z.B. eine Heizstrecke sein, in der dem Strang (2) Wärme zugeführt wird. Vorzugsweise ist hier eine Bedampfungseinrichtung (28) angeordnet, die Dampf derart von außen und/oder von innen durch den Pressdorn (26) einbringt, das der Dampf im Strang (2) kondensiert und die Kondensationsenthalpie einbringt. An die Reaktionsstrecke (27) schließt sich eine Auskühlstrecke (29) an, in der das Bindemittel aushärtet und der Strang auskühlt und zumindest teilweise auch austrocknet. Der Strang (2) bewegt sich innerhalb der Strangpresse (4) auf einer Förderstrecke (30), wobei er durch das Pressorgan (22) und dessen Antrieb (23) in Pressrichtung (24) vorgeschoben wird. Dies geschieht vorzugsweise intermittierend.

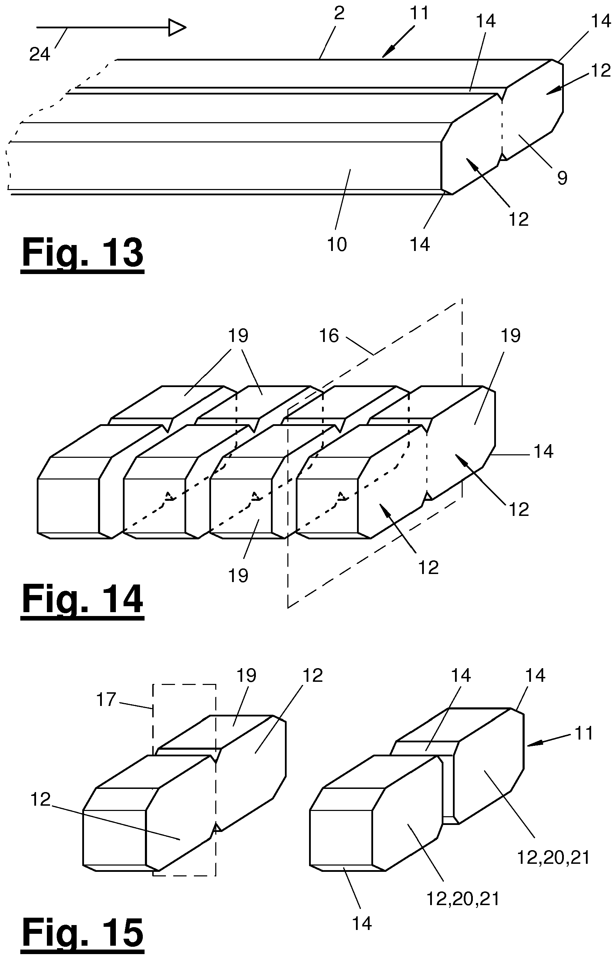

In den gezeigten Ausführungsbeispielen wird der Strang (2) quasi endlos produziert und in Pressrichtung (24) zur anschließenden Abteil-Trennvorrichtung (5) geschoben. Die Pressrichtung (24) ist zugleich die Längsachse (8) des Strangs (2). Der Strang (2) hat eine Stirnfläche (9) bzw. einen Querschnitt und einen Mantel (10) mit einer vorzugsweise über die Längsachse (8) konstanten Außenkontur (11). Der Strang (2) ist stangenartig ausgebildet. Seine Außenkontur (11) unterscheidet sich vorzugsweise von einer ebenen und flachen Plattenform. Die Außenkontur (11) des aus der Strangpresse (4) kommenden Strangs (2) weist z.B. gemäß Figur 13 bis 24 ein oder mehrere Wölbungen und/oder Fasen bzw. Kerben (14) an ein oder mehreren Seiten, insbesondere an Eckbereichen, auf.

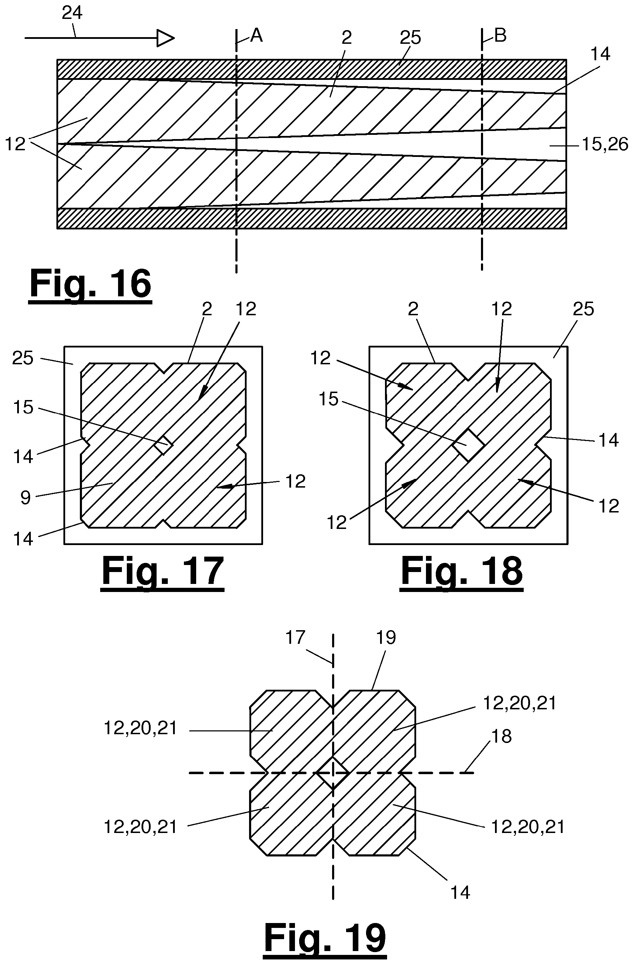

Die Außenkontur (11) wird in der Strangpresse (4), insbesondere im Formkanal (25) gebildet. Die Kanalwände haben hier für eine entsprechende Formgebung. Zur Bildung von Fasen bzw. Kerben (14) können axiale Formleisten an den Kanalwänden innenseitig angeordnet sein. Diese können eine konische Form haben, wobei deren in Pressrichtung (24) zunehmende Höhe für eine erhöhte Verdichtung des Strangs (2) in diesem Bereich sorgen kann. Im Formkanal (25) kann durch einen bevorzugt stationären Pressdorn (26) auch die Innenkontur eines hohlen Strangs (2) gebildet werden. Der Pressdorn (26) kann ebenfalls konisch und ggf. mit in Pressrichtung (24) zunehmender Weite ausgebildet sein. Figur 16 zeigt diese Anordnungen.

Der Strang (2) weist eine gegebene Stirnfläche (9) auf und wird in mehrere einzelne Strangpressprodukte (20) mit kleinerer Stirnfläche (21) getrennt und aufgeteilt. Dies geschieht in der Abteil-Trennvorrichtung (5). Das Trennen und Aufteilen erfolgt vorzugsweise in zwei oder mehr Schritten nacheinander. Die Reihenfolge ist beliebig wählbar. Die Strangpressprodukte (20) können die gleiche Form und Größe, insbesondere der Stirnfläche (21), haben. Sie können alternativ unterschiedlich ausgebildet sein.

In den gezeigten und bevorzugten Ausführungsformen werden vom Strang (2) zuerst ein oder mehrere scheiben- oder leistenförmige Strangteile (19) abgetrennt, die anschließend in jeweils mehrere Strangpressprodukte (20) abgeteilt werden. Die Reihenfolge kann auch umgedreht sein.

Das Abtrennen erfolgt durch einen Trennschnitt (16), der quer zur Längsachse (8) ausgerichtet ist. Das Abteilen geschieht durch einen oder mehrere, z.B. zwei Trennschnitte (17,18), die entlang der Längsachse (8) gerichtet sind. Wenn mehrere Trennschnitte (17,18) entlang der Längsachse (8) geführt sind, können sie eine gleiche oder unterschiedliche Neigung aufweisen. Ein Trennschnitt (17) kann z.B. aufrecht, insbesondere vertikal, und ein anderer Trennschnitt (18) liegend, insbesondere horizontal ausgerichtet sein. Vorzugsweise ist der querliegende Trennschnitt (16) rechtwinklig zur Längsachse (8) ausgerichtet. Der oder die Trennschnitte (17,18) sind bevorzugt axial und parallel zur Längsachse (8) ausgerichtet.

Figur 13 bis 15 verdeutlichen ein erstes Ausführungsbeispiel zum Trennen und Abteilen von Strangpressprodukten (20). Der Strang (2) weist mehrere nebeneinander angeordnete und nicht-diskrete Strangbereiche (12) auf, die miteinander zu einem Strangkörper innig verbunden sind. Der Strang (2) weist z.B. zwei solcher Strangbereiche (12) in einer Reihe auf, wobei deren Zahl auch größer sein kann und z.B. drei, vier oder mehr betragen kann.

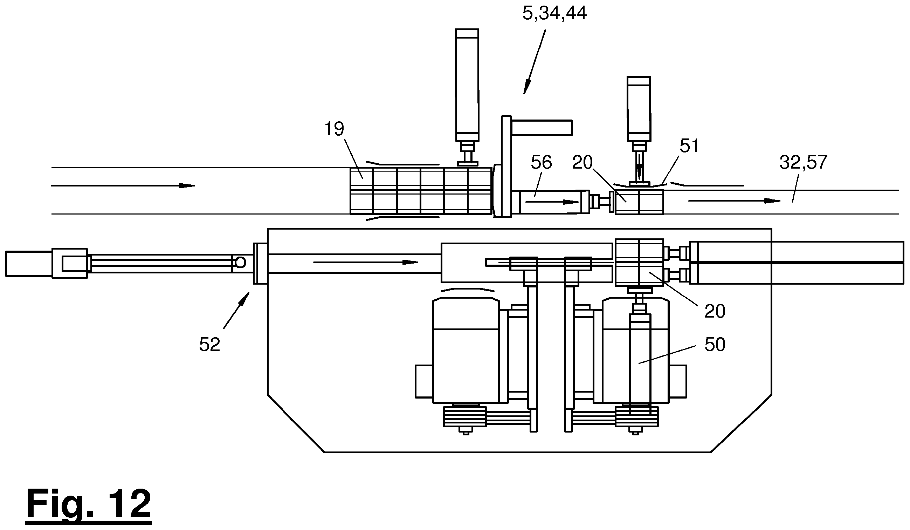

Der Strang (2) weist z.B. an den axialen Eckbereichen randseitige Fasen (14) auf. An der Ober- und Unterseite des Strangs (2) sind Fasen (14) in Form von V-förmigen Kerben vorhanden. Sie befinden sich an der Stoßstelle bzw. späteren Trennlinie für die Abteilung der Strangpressprodukte (20), die in Figur 12 gestrichelt dargestellt ist. Die Fasen (14) sind z.B. eben ausgebildet, wobei sie alternativ gewölbt bzw. verrundet oder anders konturiert sein können.

Mit einem ersten querliegenden Trennschnitt (16) werden vom Strang (2) jeweils ein oder mehrere scheiben- oder leistenförmige Strangteile (19) abgetrennt, die jeweils die nicht-diskreten Strangbereiche (12) und die Fasen (14) beeinhalten. Die Strangteile (19) werden anschließend mit einem entlang bzw. parallel zur Längsachse (8) gerichteten Trennschnitt (17) abgeteilt, wobei gemäß Figur 15 z.B. zwei Strangpressprodukte (20) entstehen. Der aufrechte Trennschnitt (17) bzw. die Trennebene verläuft durch den Kerbenfuss, wodurch die Kerbenwände jeweils eine eckseitige Fase (14) am Strangpressprodukt (20) bilden. Die Strangbereiche (12) werden durch den Trennschnitt (17) derart in Strangpressprodukte (20) abgeteilt, dass durch die entstehende Trennfläche eine Seitenwand der Strangpressprodukte (20) gebildet wird.

Wie Figur 13 bis 15 verdeutlichen, wird die gegebene Stirnfläche (9) des Strangs (2) in kleinere Stirnflächen (21) der einzelnen Strangpressprodukte (20) aufgeteilt. Die Strangbereiche (12) bilden nach dem Trennen und Abteilen den Korpus der Strangpressprodukte (20). Die Strangpressprodukte (20), insbesondere deren Stirnflächen (21), sind z.B. gleich groß. Sie können alternativ unterschiedliche Größen aufweisen. Ferner ist es möglich, dass die Formgebungen der Strangpressprodukte (20) und ihrer Stirnflächen (21) untereinander unterschiedlich sind.

Figur 16 bis 19 zeigen eine Variante des Strangs und der Strangpressprodukte (20). Im ersten Ausführungsbeispiel von Figur 13 bis 15 waren der Strang (2), die Strangbereiche (12) und die Strangpressprodukte (20) massiv ausgebildet. In der zweiten Variante von Figur 16 bis 19 weist der Strang (2) innenseitig einen Hohlkanal (15) auf. Dieser ist z.B. als axiales Dornloch ausgebildet und wird von einem Pressdorn (26) gebildet. Es können auch mehrere axiale Hohlkanäle (15) vorhanden sein.

Figur 16 zeigt diese Anordnung in einem abgebrochenen Längsschnitt durch den Formkanal (25). Hierbei sind auch die innenseitigen Formleisten zur Bildung der Fasen (14) am Strang (2) dargestellt. Figur 17 und 18 zeigen Querschnitte durch den Formkanal (25) und den Strang (2) an den Schnittlinien A und B von Figur 16.

In diesem Ausführungsbeispiel hat der Strang (2) vier nebeneinander angeordnete nicht-diskrete Strangbereiche (12), aus denen nach dem Trennen und Abteilen mit zwei Trennschnitten (17,18) entlang bzw. parallel zur Längsachse (24) vier Strangpressprodukte (20) entstehen. Die Stirnfläche (9) des Strangs (2) ist z.B. bis auf die Fasen (14) quadratisch, wobei die Strangpressprodukte (20) ebenfalls eine quadratische, kleinere Stirnfläche (21) und eckseitige Fasen (14) haben. Der inneren und bevorzugt zentrale Hohlkanal (15) hat einen rechteckigen, insbesondere quadratischen Querschnitt, wobei seine Kanalwände die späteren eckseitigen Fasen (14) an den Strangpressprodukten (20) bilden. Die liegenden und stehenden Trennschnitte (17,18) sind jeweils mittig durch den Hohlkanal (15) geführt. Die Trennflächen bilden Seitenwände der einzelnen Strangpressprodukte.

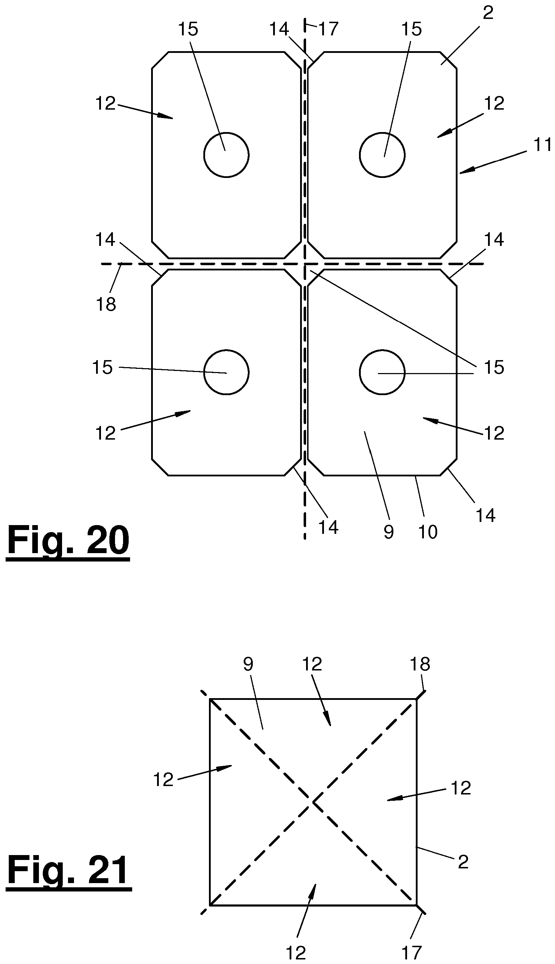

Figur 20 zeigt eine ähnliche Variante gegenüber Figur 16 bis 19, wobei hier die nicht-diskreten Strangbereiche (12) eine stehende Rechteckform haben und zusätzlich ein inneres Dornloch (15) aufweisen.

In Figur 21 ist eine weitere Variante eines rechteckigen, insbesondere quadratischen, Strangs (2) dargestellt, der vier nicht-diskrete Strangbereiche (12) aufweist, die durch schräge, insbesondere diagonale, Trennschnitte (17,18) entlang der Längsachse (8) abgeteilt werden. Hierdurch entstehen vier Strangpressprodukte (20) mit einem im Wesentlichen dreieckigen Querschnitt. Solche leistenförmigen Strangpressprodukte (20) eignen sich z.B. als Eckleisten für Kisten. Sie sind einfacher und billiger als die bisher aus dem Vollen gearbeiteten Massivholzleisten herstellbar.

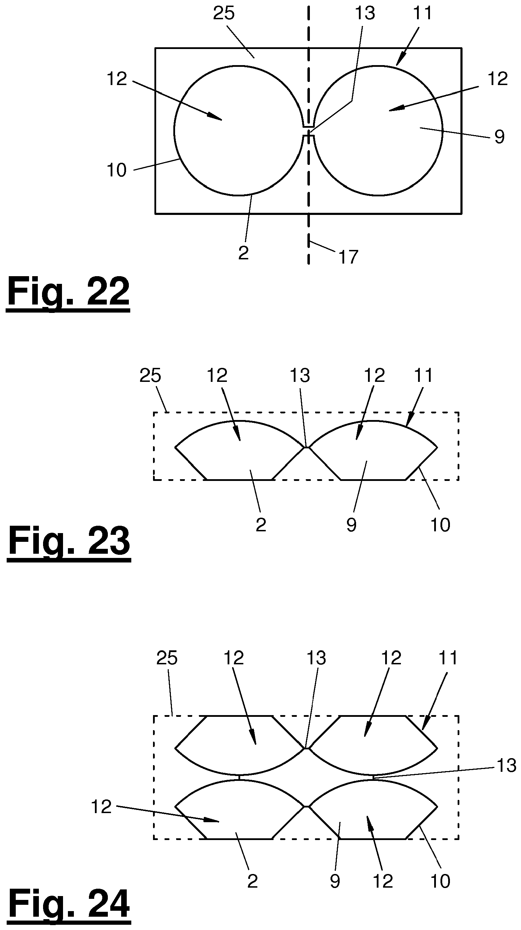

Figur 22 zeigt eine Variante mit einem Strang (2), der zwei oder mehr diskrete Strangbereiche (12) aufweist, die jeweils eine dem Strangpressprodukt (20) entsprechende Außenkontur (11) aufweisen und durch eine schmale Verbindungsstelle (13) verbunden sind. Die Verbindungsstelle (13) zwischen den nebeneinander angeordneten Strangbereichen (12) wird mit einem Trennschnitt (18) beim Abteilen durchtrennt und gegebenenfalls entfernt. Die Außenkontur (11) des Mantels (10) am Strang (2) bzw. an den späteren Strangpressprodukten (20) ist z.B. stellenweise oder vollständig gewölbt. Figur 22 zeigt eine kreisrunde Form. Der Formkanal (25) ist mit seinen Innenwänden dementsprechend ausgebildet.

Figur 23 und 24 zeigen weitere Varianten von Strängen (2) mit diskreten Strangbereichen (12) und Verbindungsstegen (13) dazwischen. Sie verdeutlichen auch andere Außenkonturen (11). In Figur 23 sind zwei Strangbereiche (12) seitlich nebeneinander und in einer Reihe angeordnet, wobei die Reihe auch länger sein kann und mehr als zwei Strangbereiche (12) umfassen kann. Figur 24 zeigt eine Variante mit z.B. vier seitlich nebeneinander und übereinander angeordneten Strangbereichen (12) nebst Verbindungsstegen (13). Die Verbindungsstege (13) werden durch einen oder mehrere liegende und/oder aufrechte Trennschnitte (17,18) zum Abteilen durchtrennt.

Bei den Ausführungsformen von Figur 13 bis 20 werden Strangpressprodukte (20) in Form von massiven oder gelochten Palettenklötzen mit abgeschrägten bzw. angefasten Eckbereichen hergestellt. Die Dicke der scheibenförmigen Strangteile (19) entspricht dabei der Klotzhöhe. Die Strangpressprodukte (20) der Varianten von Figur 21 bis 24 können ebenfalls scheibenförmig ausgebildet sein. Alternativ ist eine längliche Leistenform möglich. Die zunächst abgetrennten Strangteile (19) können dabei eine größere axiale Länge haben und leistenförmig ausgebildet sein. Bei den Varianten von Figur 21 bis 24 können die Strangquerschnitte massiv sein oder können einen oder mehrere axiale Hohlräume bzw. Hohlkanäle aufweisen.

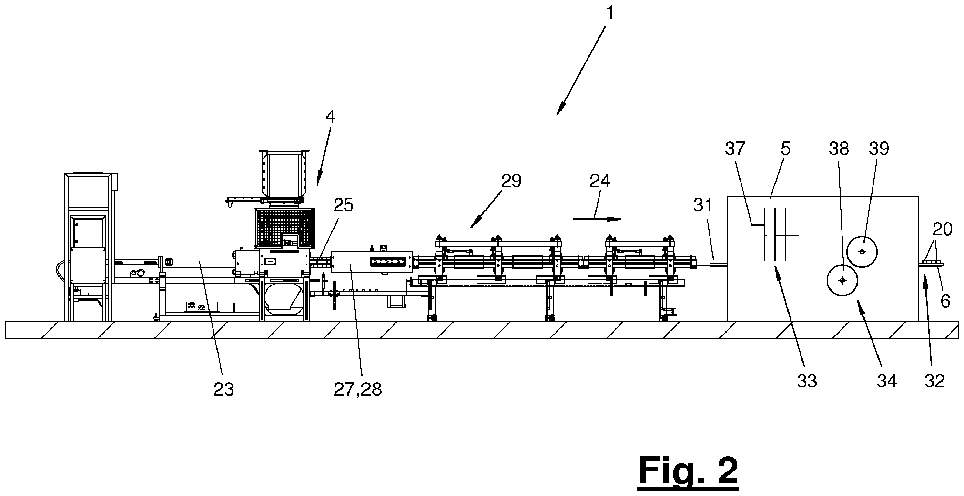

Die in Figur 1 und 2 schematisch angedeutete Abteil-Trenneinrichtung (5) weist einen Einlauf (31) für den Strang (2) und einen Auslauf (32) für die Strangpressprodukte (20) sowie mehrere Trenneinheiten (33,34) auf, die Trennmittel (37,38,39) zur Durchführung der Trennschnitte (16,17) aufweisen. Der Strang (2) kann am Einlauf (31) durch die Vorschubkraft und Vorschubfunktion der Strangpresse (4) oder durch einen separaten Einlaufförderer (nicht dargestellt) zugeführt werden. Am Auslauf (32) kann ein Auslaufförderer (57), z.B. ein umlaufender Bandförderer, angeordnet sein.

Die Trenneinheiten (33,34) sind z.B. in Richtung der Längsachse (8) mit Abstand hintereinander angeordnet. Sie können dabei einen seitlichen und quer zur Längsachse (8) bzw. Press- oder Zuführrichtung (24) gerichteten Versatz (35) aufweisen. Die Trennmittel (37,38,39) können in beliebiger geeigneter Art ausgebildet sein. Sie sind bevorzugt als Sägeblätter, z.B. als kreisrunde rotierende Sägescheiben, umlaufende Sägebänder, oszillierende Sägegatter oder dgl., ausgebildet.

Die in Pressrichtung (24) erste Trenneinheit (33) dient zum vorbeschriebenen Abtrennen der scheiben- oder leistenförmigen Strangteile (19). Sie ist z.B. als Kappsäge oder Ablängsäge ausgebildet. Das Trennmittel (37) besteht z.B. aus einem oder mehreren axial distanzierten Sägeblättern, die z.B. von einem Antrieb (40) rotierend oder umlaufend oder linear reversierend angetrieben und von einer Stellvorrichtung an den Strang (2) zugestellt werden.

Mit der Trenneinheit (33) können z.B. mehrere Strangteile (19) gleichzeitig vom Strang (2) abgetrennt werden. Der oder die Trennschnitte (16) bzw. die Trennebene(n) sind quer zur Längsachse (8) bzw. zur bevorzugt axialen Press- und Vorschubrichtung (24) ausgerichtet. Die Strangteile (19) haben die gleiche Stirnfläche (9) wie der Strang (2).

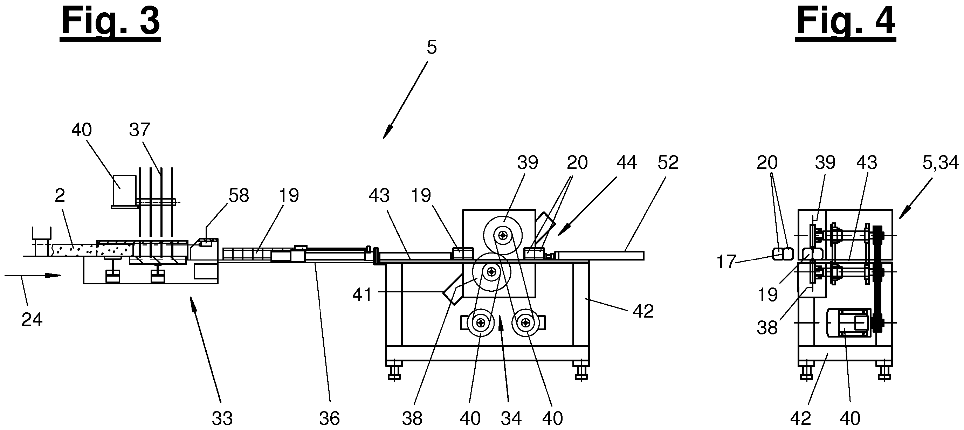

Die Trenneinheit (33) weist einen steuerbaren Fahrantrieb für das Trennmittel (37) und eine Detektionseinrichtung (58) zur Erfassung des vorderen Strangendes sowie eine mit dem Fahrantrieb zusammenwirkende Positioniereinrichtung zur exakten Positionierung des Trennmittels (37) mit Bezug zum vorderen Strangende auf. Die Trenneinheit (33) ist vorzugsweise an den Vorschubtakt des Strangs (2) angepasst und trennt den Strang (2) bei dessen Stillstand. Die Detektionseinrichtung (58) ist dem Trennmittel (37) zugeordnet und ist mit diesem zusammen längs der Strangachse (8) verfahrbar. Die Trenneinheit (33) weist ferner eine steuerbare Fixiereinrichtung für den Strang (2) auf. Der Fahrbereich des Trennmittels (37) ist größer als die Hublänge des Strangs (2). In Figur 3 sind die vorgenannten Komponenten der Trenneinheit (33) dargestellt.

Der verstellbare axiale Abstand der z.B. auf einer gemeinsamen Welle parallel angeordneten kreisrunden Sägeblätter des Trennmittels (37) bestimmt die Dicke bzw. Länge der abgetrennten scheiben- oder leistenförmigen Strangteile (19).

Die abgetrennten Strangteile (19) werden anschließend durch eine Zuführvorrichtung (36), z.B. einen umlaufenden Förderer, insbesondere Bandförderer, der nachfolgenden Trenneinheit (34) zugeführt. Diese ist z.B. als Teilsäge ausgebildet und weist ein oder mehrere Trennmittel (38,39) auf. Sie bringt die vorbeschriebenen ein oder mehreren entlang der Achse (8) ausgerichteten Trennschnitte (17,18) an den Stangenteilen (19) an. Hierbei sind auch Parallelanordnungen von mehreren Trennschnitte (17,18) zum gleichzeitigen Abteilen von mehreren Strangpressprodukten (20) möglich. Im gezeigten Ausführungsbeispiel ist gemäß Figur 13 bis 15 nur ein vertikaler Trennschnitt (17) vorgesehen.

Die Abteil-Trenneinrichtung (5), insbesondere die Trenneinheit (34), weist eine Führungs- und Positioniereinrichtung (44) für den Strang (2) und dessen Teile beim Trenn- und Abteilprozess auf. Die Führungs- und Positioniereinrichtung (44) kann verstellbar sein. Sie kann auf unterschiedliche Strangformen und auf eine unterschiedliche Zahl und Ausrichtung von Trennschnitten (17,18) entlang der Längsachse (8) adaptiert werden. Die Führungs- und Positioniereinrichtung (44) in der Trenneinheit (34) dient dazu, die Strangteile (19) und die abgeteilten Strangpressprodukte (20) zu führen und zu bewegen, insbesondere relativ zu dem oder den Trennmittel(n) (38,39).

Die Abteil-Trenneinrichtung (5), insbesondere die Trenneinheit (34), kann ferner eine Vereinzelungseinrichtung (45) für die getrennten und abgeteilten Strangpressprodukte (20) aufweisen.

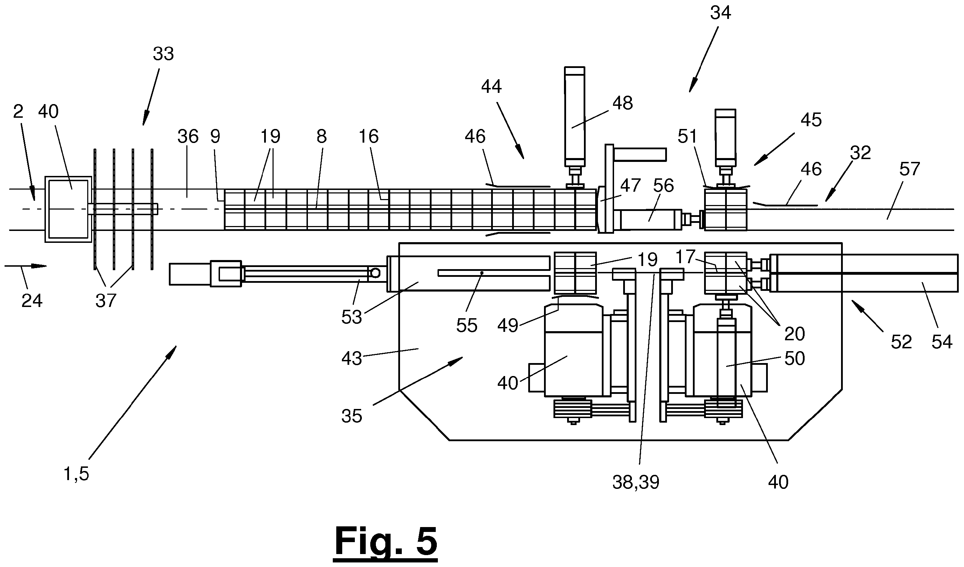

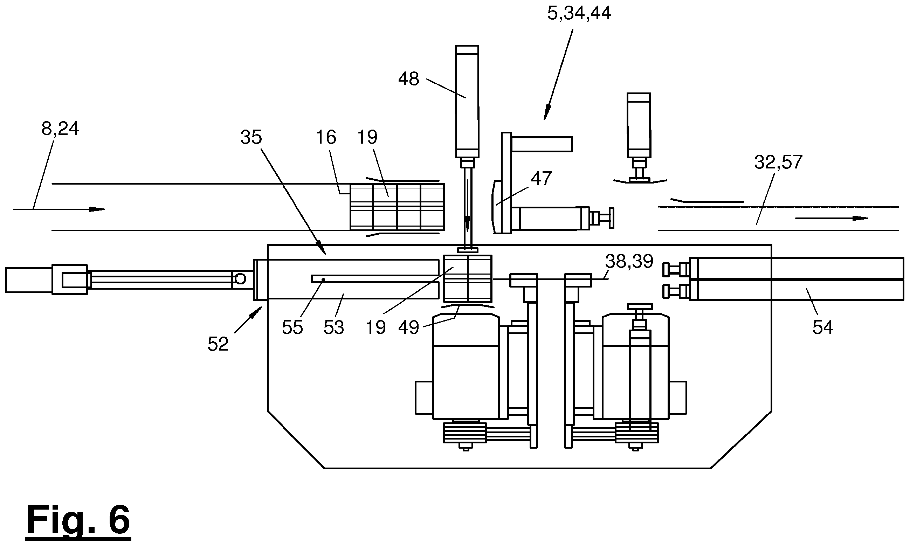

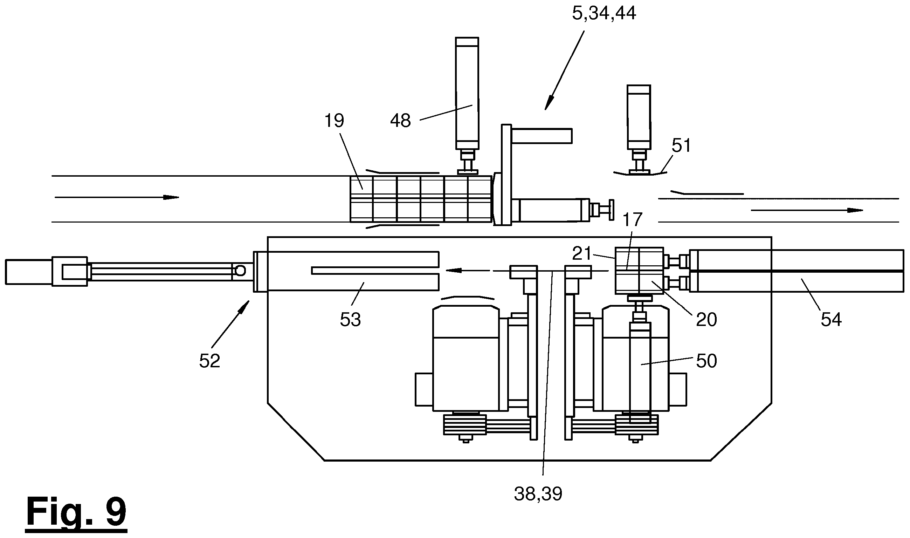

Figur 3 bis 5 zeigen die Abteil-Trenneinrichtung (5) in einer Seitenansicht, einer geklappten Stirnansicht mit Blick auf die Trenneinheit (34) und in einer Draufsicht. In der Draufsicht von Figur 5 sind in einer Gesamtdarstellung alle Strangteile (19) und deren Positionen dargestellt. Figur 6 bis 12 verdeutlichen einen Funktionsablauf der nachgeschalteten Trenneinheit (34) in mehreren Schritten.

Die Trenneinheit (34) weist z.B. ein Gestell (42) mit einer Arbeitsfläche (43) und einem Trennmittel (38,39) auf, welches bevorzugt an der Arbeitsfläche (43) angeordnet ist. Die Arbeitsfläche kann eine ebene und stationäre horizontale Oberfläche eines tischartigen Gestells (42) sein. In einer anderen und nicht dargestellten Ausführungsform kann die Arbeitsfläche (43) bereichsweise verstellbar sein, insbesondere im Bereich des oder der Trennmittel (38,39).

Die Trenneinheit (34) weist beispielhaft zwei bevorzugt stationäre Trennmittel (38,39) mit einem Antrieb (40) auf, die mit vertikalem und horizontalem Versatz angeordnet sind und die gemeinsam einen Trennschnitt (17,18) ausführen. Die Trennmittel (38,39) sind dabei in einer gemeinsamen, z.B. vertikalen Ebene angeordnet und ausgerichtet. Es handelt sich z.B. um rotierende Sägeblätter. In einer anderen und nicht dargestellten Ausführungsform kann ein einzelnes Trennmittel genügen.

Die Trenneinheit (34) kann eine Stelleinrichtung (41) für das oder die Trennmittel (38,39) aufweisen. Hierdurch kann z.B. deren Position und/oder Neigung gegen die Arbeitsfläche (43) und/oder deren gegenseitige Lage, insbesondere Abstand, bedarfsweise verstellt werden.

Die Führungs- und Positioniereinrichtung (44) weist gemäß Figur 5 am Endbereich der Zuführvorrichtung (36) ein seitliches Leitmittel (46) und einen frontseitigen Anschlag (47) für die in einer Reihe ankommenden Strangteile (19) auf. Ferner weist sie ein Positioniermittel (48) auf, das ein oder mehrere dieser am Anschlag (47) aufgestauten Strangteile (19) gemäß Figur 6 seitlich aus der Reihe weg und zu dem oder den mit dem besagten Versatz (35) angeordneten Trennmitteln (38,39) transportiert und dort an einem weiteren Anschlag (49) positioniert. Das Positioniermittel (48) ist z.B. als Schieber ausgebildet, welcher die Strangteile (19) auf der Arbeitsfläche (43) verschiebt.

Die Führungs- und Positioniereinrichtung (44) weist ferner ein Positioniermittel (52) auf, welches die am Anschlag (49) positionierten Strangteile (19) bevorzugt an ihren beidseitigen Stirnflächen fasst und dann relativ zu dem oder den Trennmitteln (38,39) für die Durchführung des oder der Trennschnitte (17,18) bewegt. Das Positioniermittel (52) weist hierbei einen Freiraum (55) für den Durchlass des oder der Trennmittel (38,39) auf.

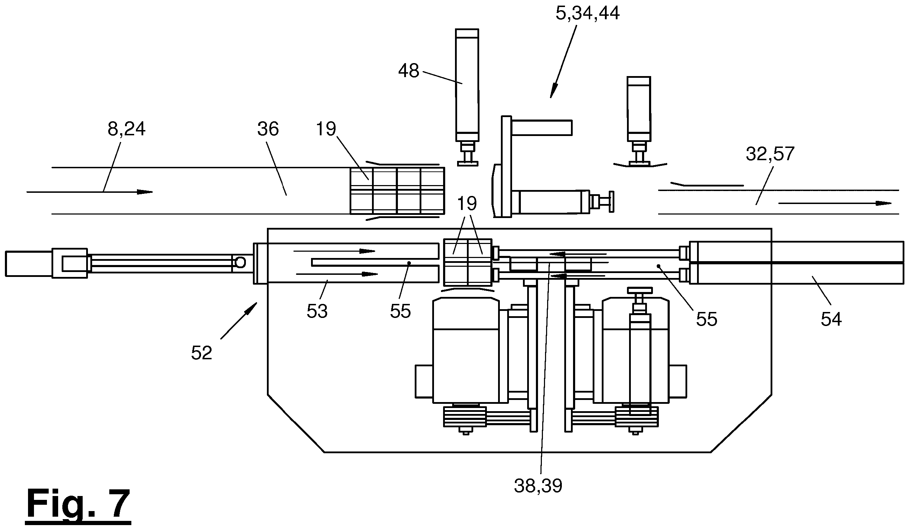

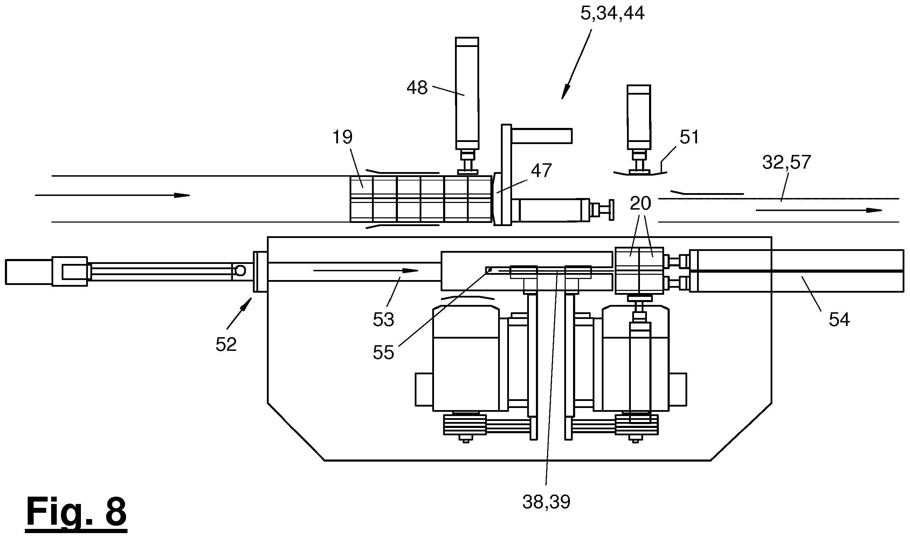

Das Positioniermittel (52) ist z.B. als Spannschieber ausgebildet, welcher mit vorderen und hinteren Spannmitteln (53,54), z.B. Stempelanordnungen von Zylindern, ein oder mehrere Strangteile (19) stirnseitig beidseits einspannt und durch eine gesteuerte Einfahr- und Ausfahrbewegung der Spannmittel (53,54) durch den oder die Trennmittel (38,39) bewegt. Der Freiraum (55) ist an den Spannmitteln (53,54) angeordnet, die z.B. parallel zu den Sägeblättern ausgerichtet sind und diese beim Strangteiltransport passieren. Die Zahl der Stempel der Spannmittel (53,54) entspricht der Zahl der beim Abteilen entstehenden Strangpressprodukte (20). Figur 7 und 8 verdeutlichen diesen Trennvorgang und die Bewegung der Strangteile (19).

In der Endstellung am eingefahrenen Spannmittel (54) ist ein weiteres Positioniermittel (50) vorhanden, welches die nun abgeteilten Strangpressprodukte (20) wieder in Querrichtung und um den Versatz (35) wieder zurück und bis an einen festen oder bevorzugt verstellbaren Anschlag (51) bewegt. Figur 8 bis 10 zeigen diese Bewegung. Das Positioniermittel (50) kann wiederum als Schieber ausgebildet sein. Während dieses Transportvorgangs bewegt sich der Spannschieber (52) wieder in die Ausgangsposition und kann dann den oder die nächsten, vom Positioniermittel (48) wieder zugeführten Strangteile (19) beaufschlagen.

Die am Anschlag (51) positionierten Strangpressprodukte (20) können von einer Abführvorrichtung (56), z.B. einem Ausstoßer, an den Auslauf (32) übergeben und in geeigneter Weise, z.B. durch den Auslaufförderer (57), abtransportiert werden.

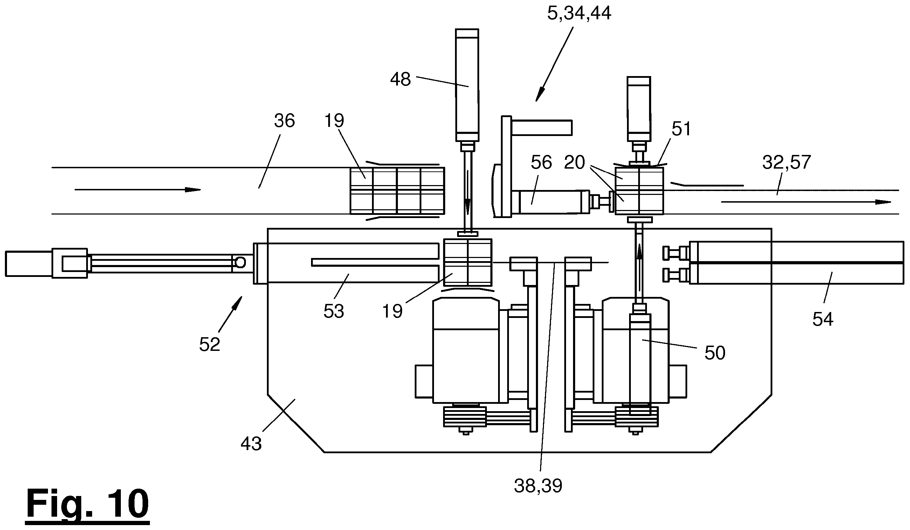

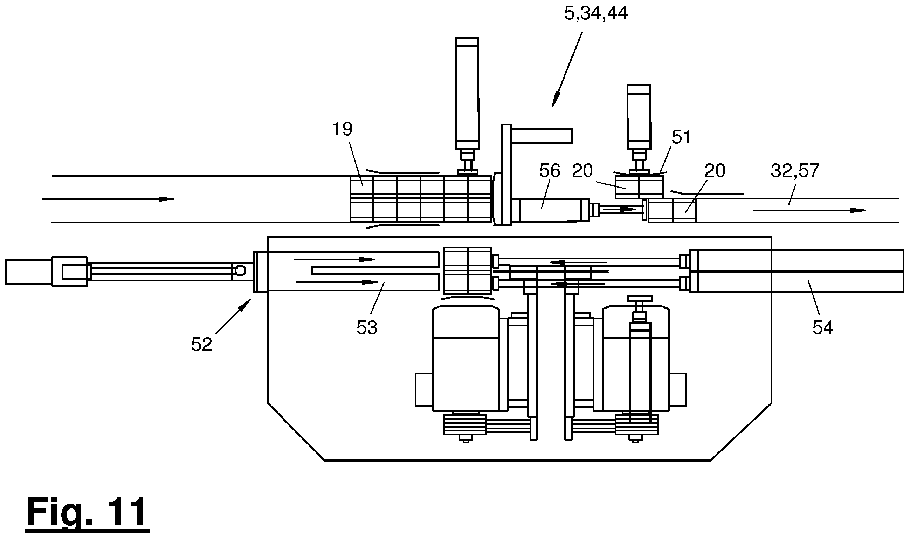

Ein verstellbarer Anschlag (51) kann Bestandteil der erwähnten Vereinzelungsvorrichtung (45) sein. Wie Figur 10 bis 12 verdeutlichen, kann der quer zur Abführvorrichtung (56) bewegliche und angetriebene Anschlag (51) zunächst so weit zurückweichen, dass das oder die in Figur 10 unteren Strangpressprodukte (20) vor die Abführvorrichtung (56) gelangen und zum Auslauf (32) abtransportier werden. Sie werden dabei relativ zu dem oder den in Figur 11 und 12 oberen Strangpressprodukten (20) bewegt, die anschließend durch eine Ausfahrbewegung des Anschlags (51) ebenfalls vor der Abführvorrichtung (56) positioniert und dann abtransportiert werden. Der Auslauf (32) kann eine Weite aufweisen, die auf die vereinzelte Reihe von Strangpressprodukten (20) abgestimmt ist.

Die Positioniermittel bzw. Schieber (48,50,52) und der verstellbare Anschlag (51) können beliebig geeignete Mechaniken und steuerbare Antriebe, z.B. die gezeigten fluidischen, insbesondere pneumatischen, Zylinder aufweisen.

Abwandlungen der gezeigten Abteil-Trennvorrichtung (5) sind in verschiedener Weise möglich.

Die Positioniermittel (48,50,52) können in anderer Weise ausgebildet sein und den oder die Strangteile (19) sowie die abgeteilten Strangpressprodukte (20) in anderer Weise beaufschlagen und transportieren. Hierfür sind z.B. hängend angeordnete und verfahrbare Greifer möglich, die zudem einen Hebetransport der Strangteile (19) bzw. Strangpressprodukte (20) ausführen können. Ferner kann die Trenneinheit (34) mehrere parallele Trennschnitte (17,18) nacheinander oder gleichzeitig durchführen und hat hierfür eine entsprechende Versatz- oder Parallelanordnung von mehreren Trennmitteln (38,39).

Außerdem können gemäß der Ausführungsbeispiele von Figur 19 bis 24 mehrere unterschiedlich geneigte Trennschnitte (17,18), z.B. liegende und stehende bzw. horizontale und vertikale Trennschnitte (17,18), durchgeführt werden. Dies ist auf unterschiedliche Weise möglich. Zum einen können nach dem ersten Trennschnitt (17) die abgeteilten Strangpressprodukte (20) um 90° gewendet werden, so dass mit dem oder den vorhandenen Trennmitteln (38,39) der nächste und anders geneigte Trennschnitt (18) durchgeführt werden kann. Alternativ ist eine Mehrfachanordnung von unterschiedlich geneigten Trennmitteln (37,38) möglich.

Für schräge, insbesondere diagonale Trennschnitte (17,18) kann die Arbeitsfläche (43) im Trennmittelbereich verstellbar sein und kann z.B. als Schwenkführung für die Strangteile (19) bzw. Strangpressprodukte (20) ausgebildet sein. Alternativ oder zusätzlich ist es möglich, die Neigung des oder der Trennmittel (38,39) entsprechend zu verstellen.

Außerdem kann die Führungs- und Positioniereinrichtung (44), insbesondere das Positioniermittel (52) bzw. der Spannschieber entsprechend verstellbar ausgebildet sein. Die Stempelanordnungen (53,54) können z.B. austauschbar und/oder verstellbar sein. Für eine Anpassung an eine variierende Zahl von Abteilvorgängen von Strangpressprodukten (20) können die Stempel an einem austauschbaren oder verstellbaren Stempelhalter angeordnet sein, der mit einem Antrieb des Spannmittels (53,54), z.B. dem besagten Zylinder, verbunden ist.

In weiterer Variation kann auf den seitlichen Versatz (35) verzichtet werden, wobei die Führungs- und Positioniereinrichtung (44) entsprechend anders ausgebildet ist und die Strangteile (19) bzw. Strangpressprodukte (20) z.B. von oben her beaufschlagt bzw. greift und führt bzw. bewegt.

Ferner ist eine kinematische Umkehr bei der Relativbewegung von Strangteilen (19) bzw. Strangpressprodukten (20) und Trennmitteln (38,39) möglich, wobei das oder die Trennmittel (38,39) relativ zu den ruhenden Strangteilen (19) bzw. Strangpressprodukten (20) bewegt werden. In weiterer Abwandlung ist ein Relativbewegung unter beiderseitiger Bewegung möglich.

Die eingangs genannte Kontrolleinrichtung (6) kann im Anschluss an die Abteil-Trennvorrichtung (5) und z.B. am Auslauf (32), insbesondere am Auslaufförderer (57), angeordnet sein. Sie kann alternativ in die Abteil-Trennvorrichtung (5) integriert sein. Die Kontrolleinrichtung (6) kann z.B. eine Wiegeeinrichtung, insbesondere eine Bandwaage, zum Wiegen von einzelnen oder Gruppen von Strangteilen (19) und/oder Strangpressprodukten (20) aufweisen. Alternativ oder zusätzlich kann die Kontrolleinrichtung (6) eine Vermessungseinrichtung für die Außenmaße und/oder eine Dichtemesseinrichtung für die Strangteile (19) und/oder Strangpressprodukte (20) aufweisen.

Die Kontrolleinrichtung (6) kann mit der Strangpresse (4) und/oder der Abteil-Trennvorrichtung (5) steuer- oder regeltechnisch verbunden sein. Bei Auftreten von Messwertabweichungen von den Soll-Vorgaben kann der Strangpressprozess und/oder der Trenn- und Abteilprozess nachgesteuert und gegebenenfalls geregelt werden.

Die getrennten und abgeteilten Strangpressprodukte (20) stellen vorzugsweise die Endprodukte der Herstellvorrichtung (1) und des Herstellverfahrens dar. Sie können einer nachgeschalteten Nachbereitung (7) zugeführt werden. Diese kann z.B. eine Nachtrocknung der Strangpressprodukte (20) auf eine gewünschte Restfeuchte und/oder Abkühlung auf die gewünschte Endtemperatur beeinhalten. Ferner kann eine Kommissionierung, insbesondere Lagenbildung und Palettierung der Strangpressprodukte (20) sowie eine anschließende Verpackung und Versendung stattfinden.

Abwandlungen der gezeigten und beschriebenen Ausführungsformen sind in verschiedener Weise möglich. Insbesondere können die Merkmale der Ausführungsbeispiele und der genannten Varianten beliebig miteinander kombiniert, insbesondere vertauscht werden.

In den gezeigten Ausführungsbeispielen wird der Strang (2) der Abteil-Trennvorrichtung (5) von der Strangpresse (4) direkt zugeführt. In einer anderen Ausführungsform können Stränge (2) vorgefertigt und mit einer Kappsäge auf eine vorgegebene Strang- oder Stangenlänge abgelängt werden. Die hierdurch gebildeten Stangen oder Stränge können dann quer zur Längsachse (8) zusammengeführt und mittels eines Einlaufförderers der Abteil-Trennvorrichtung (5) sowie der Kontrolleinrichtung (6) und der Nachbereitung (7) zugeführt werden.

Je nach vorhandener Prozesskapazität können mehrere Strangpressen (4) einer gemeinsamen Abteil-Trennvorrichtung (5) und ggf. einer gemeinsamen Kontrolleinrichtung (6) sowie Nachbereitung (7) zugeordnet werden. Ferner ist es möglich, mit Zwischenlagern oder Puffern für abgelängte Stangen oder Stränge (2) zu arbeiten. Hierbei können ebenfalls ein oder mehrere Einlaufförderer eingesetzt werden.

In den gezeigten und bevorzugten Ausführungsbeispielen sind die Komponenten der Herstellvorrichtung (1) gemeinsam in einem Herstellbereich oder Anlagenbereich angeordnet. Alternativ können ein oder mehrere Komponenten, z.B. Strangpressen (4), ausgelagert und ein überörtlicher Transport der Stangen oder Stränge (2) zwischengeschaltet sein.

### BEZUGSZEICHENLISTE

- 1: Herstellvorrichtung, Strangpressanlage
- 2: Strang, Strangpressstrang
- 3: Aufbereitung Kleinteile
- 4: Strangpresse
- 5: Trennvorrichtung, Abteil-Trennvorrichtung, Abteil-Säge
- 6: Kontrolleinrichtung, Wiegeeinrichtung
- 7: Nachbereitung Strangpressprodukte
- 8: Längsachse
- 9: Stirnfläche
- 10: Mantel
- 11: Außenkontur
- 12: Strangbereich
- 13: Verbindung, Verbindungsstelle
- 14: Fase, Kerbe
- 15: Hohlkanal innen, Dornloch
- 16: Trennschnitt, Trennebene quer
- 17: Trennschnitt, Trennebene axial, aufrecht
- 18: Trennschnitt, Trennebene axial, liegend
- 19: Strangteil, Scheibe
- 20: Strangpressprodukt, Klotz, Leiste
- 21: Stirnfläche
- 22: Pressorgan, Pressstempel
- 23: Antrieb, Zylinder
- 24: Strangpressrichtung
- 25: Formkanal, Rezipient
- 26: Pressdorn, Dorn
- 27: Reaktionsstrecke, Heizstrecke
- 28: Bedampfungseinrichtung
- 29: Auskühlstrecke
- 30: Förderstrecke
- 31: Einlauf für Strang
- 32: Auslauf für Strangpressprodukt
- 33: Trenneinheit, Kappsäge, Ablängsäge
- 34: Trenneinheit, Teilsäge
- 35: Versatz
- 36: Zuführvorrichtung, Förderer
- 37: Trennmittel, Sägeblatt von Kappsäge
- 38: Trennmittel, Sägeblatt unten von Teilsäge
- 39: Trennmittel, Sägeblatt oben von Teilsäge
- 40: Antrieb
- 41: Stelleinrichtung
- 42: Gestell
- 43: Arbeitsfläche
- 44: Führungs- und Positioniereinrichtung
- 45: Vereinzelungseinrichtung
- 46: Leitmittel
- 47: Anschlag, Stranganschlag
- 48: Positioniermittel, Schieber
- 49: Anschlag
- 50: Positioniermittel, Schieber
- 51: Anschlag verstellbar
- 52: Positioniermittel, Spannschieber
- 53: Spannmittel, Stempelanordnung
- 54: Spannmittel, Stempelanordnung
- 55: Freiraum
- 56: Abführvorrichtung, Ausstosser
- 57: Auslaufförderer
- 58: Detektionseinrichtung

## Patentansprüche

1. Verfahren zum Herstellen von Strangpressprodukten (20) aus einem stangenförmigen, stranggepressten Strang (2) aus mit Bindemittel versehenen Holzkleinteilen, der bevorzugt eine von einer ebenen flachen Plattenform abweichende Außenkontur (11) aufweist und der getrennt wird, **dadurch gekennzeichnet, dass** der Strang (2) eine gegebene Stirnfläche (9) aufweist und in mehrere einzelne Strangpressprodukte (20), insbesondere Klötze und/oder Leisten, mit kleinerer Stirnfläche (21) getrennt und aufgeteilt wird.

2. Verfahren nach Anspruch 1, **dadurch gekennzeichnet, dass** der massive oder hohle Strang (2) in einer Strangpresse (5), bevorzugt mit einer Wärmeinbringung von innen und/oder von außen durch Dampfkondensation, hergestellt und mit einer Abteil-Trennvorrichtung (5) in die Strangpressprodukte (20) getrennt und aufgeteilt wird.

3. Verfahren nach Anspruch 1 oder 2, **dadurch gekennzeichnet, dass** der Strang (2) durch mehrere Trennschnitte (16,17,18) getrennt und aufgeteilt wird, die entlang und quer zur Längsachse (8) des Strangs (2) gerichtet sind.

4. Verfahren nach einem der vorhergehenden Ansprüche, **dadurch gekennzeichnet, dass** mehrere unterschiedlich geneigte Trennschnitte (17,18) entlang der Längsachse (8) des Strangs (2) gerichtet sind.

5. Verfahren nach Anspruch 3 oder 4, **dadurch gekennzeichnet, dass** vom Strang (2) bevorzugt scheiben- oder leistenförmige Strangteile (19) mit einem Trennschnitte (16) quer zur Längsachse (8) des Strangs (2) abgetrennt werden, die anschließend mit einem Trennschnitt (17,18) entlang der Längsachse (8) des Strangs (2) in mehrere Strangpressprodukte (20) abgeteilt werden.

6. Verfahren nach einem der vorhergehenden Ansprüche, **dadurch gekennzeichnet, dass** der Strang (2) mehrere nebeneinander angeordnete nicht-diskrete Strangbereiche (12) aufweist, die durch einen Trennschnitt (17,18) in mehrere Strangpressprodukte (20) derart abgeteilt werden, dass durch die Trennfläche eine Seitenwand der Strangpressprodukte (20) gebildet wird.

7. Verfahren nach einem der vorhergehenden Ansprüche, **dadurch gekennzeichnet, dass** der Strang (2) mit einem inneren Hohlkanal (15) hergestellt wird, wobei ein entlang der Längsachse (8) des Strangs (2) gerichteter Trennschnitt (17,18) durch den Hohlkanal (15) geführt wird.

8. Verfahren nach Anspruch 7, **dadurch gekennzeichnet, dass** der Strang (2) mit Fasen (14) an den äußeren Eckbereichen und mit einem rechteckigen inneren Hohlkanal (15) hergestellt wird, dessen Kanalwände nach dem Trennen und Abteilen eine Fase (14) an den Strangpressprodukten (20) bilden.

9. Verfahren nach einem der Ansprüche 1 bis 5, **dadurch gekennzeichnet, dass** der Strang (2) mehrere nebeneinander angeordnete diskrete Strangbereiche (12) aufweist, die jeweils eine dem Strangpressprodukt (20) entsprechende Außenkontur (11) aufweisen und durch eine schmale Verbindungsstelle (13) verbunden sind, die mit einem Trennschnitt (17,18) durchtrennt wird.

10. Vorrichtung zur Durchführung des Verfahrens nach einem der Ansprüche 1 bis 9 zum Herstellen von Strangpressprodukten (20) aus einem stangenförmigen, stranggepressten Strang (2) aus mit Bindemittel versehenen Holzkleinteilen, wobei die Herstellvorrichtung (1) eine Trenneinrichtung aufweist, **dadurch gekennzeichnet, dass** die Trenneinrichtung als Abteil-Trenneinrichtung (5) ausgebildet ist, welche den stangenförmigen Strang (2) mit einer gegebenen Stirnfläche (9) in mehrere einzelne Strangpressprodukte (20), insbesondere Klötze und/oder Leisten, mit kleinerer Stirnfläche (21) trennt und aufteilt.

11. Vorrichtung nach Anspruch 10, **dadurch gekennzeichnet, dass** die Herstellvorrichtung (1) eine Strangpresse (4), vorzugsweise mit einer Bedampfungseinrichtung (28) und ggf. einem Pressdorn (26), und eine nachgeschaltete Abteil-Trenneinrichtung (5) aufweist, wobei die Strangpresse (4) einen stangenförmigen, stranggepressten, massiven oder hohlen Strang (2) aus mit Bindemittel versehenen Holzkleinteilen, bevorzugt mit einer von einer ebenen flachen Plattenform abweichenden Außenkontur (11), herstellt und kontinuierlich oder intermittierend in Strangpressrichtung (24) vorschiebt.

12. Vorrichtung nach Anspruch 10 oder 11, **dadurch gekennzeichnet, dass** die Abteil-Trenneinrichtung (5) dazu ausgebildet ist, zur Trennung und Aufteilung des Strangs (2) mehrere entlang und quer zur Längsachse (8) des Strangs (2) gerichtete Trennschnitte (16,17,18) auszuführen.

13. Vorrichtung nach Anspruch 10, 11 oder 12, **dadurch gekennzeichnet, dass** die Abteil-Trenneinrichtung (5) mehrere, bevorzugt hintereinander und mit seitlichem Versatz (35) angeordnete, Trenneinheiten (33,34) mit Trennmitteln (37,38,39), bevorzugt Sägeeinheiten, aufweist, die entlang und quer zur Längsachse (8) des Strangs (2) ausgerichtete Trennschnitte (16,17,18) erzeugen.

14. Vorrichtung nach einem der Ansprüche 10 bis 13,
**dadurch gekennzeichnet, dass** die Abteil-Trenneinrichtung (5), insbesondere die Trenneinheit (34), eine ggf. verstellbare Führungs- und Positioniereinrichtung (44) für den Strang (2) und dessen Teile beim Trenn- und Abteilprozess sowie ggf. eine Vereinzelungseinrichtung (45) für die getrennten und abgeteilten Strangpressprodukte (20) aufweist.

15. Strangpressprodukt aus mit Bindemittel versehenen Holzkleinteilen, **dadurch gekennzeichnet, dass** das massive oder hohle bzw. gelochte Strangpressprodukt (20), insbesondere ein Klotz, bevorzugt Palettenklotz, oder eine längliche Leiste, mit einem Verfahren nach einem der Ansprüche 1 bis 9 hergestellt ist.

## Claims

1. Method for producing extruded products (20) from a bar-shaped, extruded section (2) which is composed of wood particles provided with a binding agent and which preferably has an external contour (11) deviating from a planar flat board form and which is separated, **characterized in that** the section (2) has a defined end face (9) and is separated and divided into a plurality of individual extruded products (20), in particular blocks and/or mouldings, having a smaller end face (21).

2. Method according to Claim 1, **characterized in that** the solid or hollow section (2) is produced in an extruder (5), preferably with a thermal input from the inside and/or the outside by steam condensation, and by way of a separating/severing device (5) is separated and divided into the extruded products (20) .

3. Method according to Claim 1 or 2, **characterized in that** the section (2) is separated and divided by a plurality of separating cuts (16, 17, 18) that are directed along and transversely to the longitudinal axis (8) of the section (2).

4. Method according to one of the preceding claims, **characterized in that** a plurality of separating cuts (17, 18) of dissimilar inclinations are directed along the longitudinal axis (8) of the section (2).

5. Method according to Claim 3 or 4, **characterized in that** disc-shaped or moulding-shaped section parts (19) are preferably severed from the section (2) by way of a separating cut (16) transverse to the longitudinal axis (8) of the section (2), said section parts (19) subsequently being divided into a plurality of extruded products (20) by way of a separating cut (17, 18) along the longitudinal axis (8) of the section (2).

6. Method according to one of the preceding claims, **characterized in that** the section (2) has a plurality of non-discrete section regions (12) which are disposed beside one another and which by way of a separating cut (17, 18) are divided into a plurality of extruded products (20) in such a manner that a lateral wall of the extruded products (20) is formed by the separation face.

7. Method according to one of the preceding claims, **characterized in that** the section (2) is produced having an internal hollow duct (15), wherein a separating cut (17, 18) that is directed along the longitudinal axis (8) of the section (2) is guided through the hollow duct (15).

8. Method according to Claim 7, **characterized in that** the section (2) is produced having chamfers (14) on the external corner regions and having a rectangular internal hollow duct (15), the duct walls of the latter, upon separating and dividing, forming a chamfer (14) on the extruded products (20).

9. Method according to one of Claims 1 to 5, **characterized in that** the section (2) has a plurality of discrete section regions (12) which are disposed beside one another and which have in each case an external contour that corresponds to the extruded product (20) and are connected by a narrow joint (13) that is severed by a separating cut (17, 18) .

10. Device for carrying out the method according to one of Claims 1 to 9 for producing extruded products (20) from a bar-shaped, extruded section (2) composed of wood particles provided with a binding agent, wherein the production device (1) has a separating installation, **characterized in that** the separating installation is configured as a dividing/separating installation (5) which separates and divides the bar-shaped section (2) having a defined end face (9) into a plurality of individual extruded products (20), in particular blocks and/or mouldings, having a smaller end face (21) .

11. Device according to Claim 10, **characterized in that** the production device (1) has an extruder (4), preferably having a steaming installation (28) and optionally a mandrel (26), and a downstream dividing/separating installation (5), wherein the extruder (4) produces a bar-shaped, extruded, solid or hollow section (2) composed of wood particles provided with a binding agent, preferably having an external contour (11) deviating from a planar flat board form, and advances said section (2) continuously or intermittently in the extrusion direction (24).

12. Device according to Claim 10 or 11, **characterized in that** the dividing/separating installation (5), for separating and dividing the section (2), is configured for carrying out a plurality of separating cuts (16, 17, 18) that are directed along and transversely to the longitudinal axis (8) of the section (2).

13. Device according to Claim 10, 11 or 12, **characterized in that** the dividing/separating installation (5) has a plurality of separating units (33, 34) which are preferably disposed behind one another and at a lateral offset (35) and which have separating means (37, 38, 39), preferably sawing units, which generate separating cuts (16, 17, 18) that are aligned along and transversely to the longitudinal axis (8) of the section (2).

14. Device according to one of Claims 10 to 13, **characterized in that** the dividing/separating installation (5), in particular the separating unit (34), has an optionally adjustable guiding and positioning installation (44) for the section (2) and the parts of the latter during the separating and dividing process, as well as optionally a singularizing installation (45) for the separated and divided extruded products (20).

15. Extruded product composed of wood particles provided with a binding agent, **characterized in that** the solid or hollow or perforated, respectively, extruded product (20), in particular a block, preferably a pallet block, or an elongate moulding, is produced by a method according to one of Claims 1 to 9.

## Revendications

1. Procédé de fabrication de produits extrudés (20) à partir d'une barre extrudée (2) en forme de tige composée de particules de bois dotées de liant, qui présente de préférence un contour extérieur (11) différent d'une forme de plaque plate et plane et qui est séparée, **caractérisé en ce que** la barre (2) présente une face frontale donnée (9) et est séparée et divisée en plusieurs produits extrudés individuels (20), en particulier en blocs et/ou lattes ayant une face frontale (21) plus petite.

2. Procédé selon la revendication 1, **caractérisé en ce que** la barre (2) pleine ou creuse est fabriquée dans une extrudeuse (5), de préférence avec un apport de chaleur de l'intérieur et/ou de l'extérieur par condensation de vapeur, et est séparée et divisée en produits extrudés (20) par un dispositif de séparation et de division (5).

3. Procédé selon la revendication 1 ou 2, **caractérisé en ce que** la barre (2) est séparée et divisée par plusieurs coupes de séparation (16, 17, 18) qui sont orientées le long et transversalement à l'axe longitudinal (8) de la barre (2).

4. Procédé selon l'une quelconque des revendications précédentes, **caractérisé en ce que** plusieurs coupes de séparation (17, 18) inclinées différemment sont orientées le long de l'axe longitudinal (8) de la barre (2) .

5. Procédé selon la revendication 3 ou 4, **caractérisé en ce que** des parties de barre (19), de préférence en forme de tranches ou de lattes, sont séparées de la barre (2) par une coupe de séparation (16) transversalement à l'axe longitudinal (8) de la barre (2), et qui sont ensuite divisées en plusieurs produits extrudés (20) par une coupe de séparation (17, 18) le long de l'axe longitudinal (8) de la barre (2).

6. Procédé selon l'une quelconque des revendications précédentes, **caractérisé en ce que** la barre (2) présente plusieurs zones de barre (12) non discrètes, disposées les unes à côté des autres, qui sont divisées en plusieurs produits extrudés (20) par une coupe de séparation (17, 18) de telle sorte que la surface de séparation forme une paroi latérale des produits extrudés (20).

7. Procédé selon l'une quelconque des revendications précédentes, **caractérisé en ce que** la barre (2) est fabriquée avec un canal creux intérieur (15), une coupe de séparation (17, 18) orientée le long de l'axe longitudinal (8) de la barre (2) étant guidée à travers le canal creux (15).

8. Procédé selon la revendication 7, **caractérisé en ce que** la barre (2) est fabriquée avec des chanfreins (14) dans les zones d'angle extérieure et avec un canal creux intérieur rectangulaire (15) dont les parois de canal forment un chanfrein (14) sur les produits extrudés (20) après la séparation et la division.

9. Procédé selon l'une quelconque des revendications 1 à 5, **caractérisé en ce que** la barre (2) présente plusieurs zones de barre (12) discrètes, disposées les unes à côté des autres, qui présentent respectivement un contour extérieur (11) correspondant au produit extrudé (20) et sont reliées par un point de jonction étroit (13) qui est sectionné par une coupe de séparation (17, 18).

10. Dispositif permettant d'exécuter le procédé selon l'une quelconque des revendications 1 à 9 afin de fabriquer des produits extrudés (20) à partir d'une barre extrudée (2) en forme de tige composée de particules de bois dotées de liant, le dispositif de fabrication (1) présentant un dispositif de séparation, **caractérisé en ce que** le dispositif de séparation est réalisé sous la forme d'un dispositif de séparation et de division (5) qui sépare et divise la barre (2) en forme de tige dotée d'une face frontale donnée (9) en plusieurs produits extrudés individuels (20), en particulier en blocs et/ou en lattes ayant une face frontale (21) plus petite.

11. Dispositif selon la revendication 10, **caractérisé en ce que** le dispositif de fabrication (1) présente une extrudeuse (4), de préférence dotée d'un dispositif de vaporisation (28) et éventuellement d'un mandrin de pression (26), et un dispositif de séparation et de division (5) placé en aval, dans lequel l'extrudeuse (4) fabrique et fait avancer en continu ou par intermittence dans la direction d'extrusion (24) une barre extrudée (2) pleine ou creuse, en forme de tige, composée de particules de bois dotées de liant, ayant de préférence un contour extérieur (11) différent d'une forme de plaque plate et plane.

12. Dispositif selon la revendication 10 ou 11, **caractérisé en ce que** le dispositif de séparation et de division (5) est réalisé pour effectuer plusieurs coupes de séparation (16, 17, 18) orientées le long et transversalement à l'axe longitudinal (8) de la barre (2) pour séparer et diviser la barre (2).

13. Dispositif selon la revendication 10, 11 ou 12, **caractérisé en ce que** le dispositif de séparation et de division (5) présente plusieurs unités de séparation (33, 34), disposées de préférence les unes après les autres et avec un décalage latéral (35), dotées de moyens de séparation (37, 38, 39), de préférence d'unités de sciage, qui produisent des coupes de séparation (16, 17, 18) orientées le long et transversalement à l'axe longitudinal (8) de la barre (2) .

14. Dispositif selon l'une quelconque des revendications 10 à 13, **caractérisé en ce que** le dispositif de séparation et de division (5), en particulier l'unité de séparation (34), présente un dispositif de guidage et de positionnement (44), éventuellement réglable, pour la barre (2) et les parties de celle-ci lors du processus de séparation et de division, ainsi que le cas échéant un dispositif s'isolation (45) pour les produits extrudés séparés et divisés (20).

15. Produit extrudé composé de particules de bois dotées de liant, **caractérisé en ce que** le produit extrudé (20) plein ou creux ou perforé, en particulier un bloc, de préférence un bloc de palette, ou une latte allongée, est fabriqué par un procédé selon l'une quelconque des revendications 1 à 9.
